# EUROPÄISCHE PATENTSCHRIFT

(11) **EP 1 281 326 B1**
(45) Veröffentlichungstag und Bekanntmachung des Hinweises auf die Patenterteilung: **11.05.2005**
(21) Anmeldenummer: 02017080.9
(22) Anmeldetag: 29.07.2002
(51) Int. Cl.: A23L 2/02, A23L 2/38, A23L 2/385

(54) **Holunderblüten-Getränk und Verfahren zu dessen Herstellung**
Elder Flower Drink and process for its preparation
Boisson à base de fleurs de sureau et procédé pour sa préparation

(30) Priorität: 03.08.2001 DE 10138061
(43) Veröffentlichungstag der Anmeldung: 05.02.2003
(73) Patentinhaber: Berl, Theo F., 77694 Kehl-Marlen (DE)
(72) Erfinder: Berl, Theo F., 77694 Kehl-Marlen (DE)
(74) Vertreter: Becker Kurig Straus

(56) Entgegenhaltungen:
- EP-A- 0 769 250
- DE-A- 2 031 145
- DE-C- 19 820 680
- DE-U- 29 811 153
- ANON.: "Cocktails mit Holunderblütensirup" ECOCKTAIL, [Online] XP002220049 Gefunden im Internet: <URL:http://www.ecocktail.de/de/ecocktail- cgi/datenbank/zutaten_cocktails.cgi?zutate n_id=2993&zutaten_name=Holunderbl%FCtensir up> [gefunden am 2002-11-07]

## Beschreibung

Die vorliegende Erfindung betrifft ein Getränk, das Inhaltsstoffe von Holunderblüten, insbesondere Holunderblütenstaub, enthält, sowie ein Verfahren zu dessen Herstellung.

Aus der Literatur ist eine Vielzahl unterschiedlichster Getränke bekannt, die pürierte Früchte und/oder wässrige oder alkoholische Extrakte von Pflanzen enthalten, wobei neben den Früchten der Pflanzen, auch Blüten, Stengel und Wurzeln als Ausgangsmaterialen verwendet werden.

Viele der Getränke auf pflanzlicher Basis weisen jedoch den Nachteil auf, daß sie nur eine kurze Haltbarkeit aufweisen und somit nicht für Herstellung und Vertrieb in größerem Maßstab geeignet sind. Andererseits werden derartige Produkte auf pflanzlicher Basis von den Verbrauchern sehr hoch geschätzt, da in ihnen viele wertvolle Substanzen und Substanzgemische zu finden sind, die sowohl sehr wohlschmeckend sind, als auch seit Jahrhunderten als Hausmittel verwendet werden.

Die DE 199 53 727 beschreibt beispielsweise ein Tamarindextrakt enthaltendes Getränk, bei dem der Tamarindextrakt einen Teil der Säure im Getränk ersetzen soll.

Weiter offenbart die EP 1099386 die Herstellung eines Getränks auf der Basis gerösteter Kartoffelschalen, das einen ausgezeichneten Geschmack, sowie auch therapeutische Eigenschaften aufweist. Das Verfahren umfasst Trocknen, Rösten und Zerkleinern von Kartoffelschalen zum Erhalt eines Pulvers, das in heißem Wasser extrahiert werden kann.

Die DE 298 11 153 U zeigt ein Rezept zur Herstellung eines Holunderblüten-Syrups. Holunderblüten werden mit Wasser extrahiert, durch ein Tuch abgegossen, die Flüssigkeit mit Zitronensaft und Zitronensäure versetzt, anschließend erhitzt und Zucker hinzugefügt.

In DE 20 31 145 A wird einen Grundstoff zur Herstellung von Genuss- und kosmetischen Mitteln beschrieben. Der Grundstoff wird durch Extraktion von Holunderblüten erhalten und beispielsweise zur Herstellung von alkoholischen und nichtalkoholischen Getränken verwendet. Die Inhaltsstoffe eines derartigen Getränks können Blüten von Holunderdolden, Wasser, Zucker, Zitronensäure, Zitronen und Alkohol umfassen.

Eine Aufgabe der vorliegenden Erfindung ist es ein weiteres, wohlschmeckendes Getränk auf pflanzlicher Basis bereitzustellen, das eine ausreichende, einen handelsüblichen Vertrieb ermöglichende Haltbarkeit aufweist und das auch im größerem Maßstab einfach herstellbar ist.

Erfindungsgemäß wird diese Aufgabe durch ein Getränk gemäß Anspruch 1, das Inhaltsstoffe von Holunderblüten, insbesondere Holunderblütenstaub enthält, und durch ein Verfahren zur Herstellung eines Holunderblüten-Getränks gemäß Anspruch 12 gelöst.

Bei der Herstellung des erfindungsgemäßen Holunderblüten-Getränks waren eine Vielzahl unterschiedlichster Parameter zu berücksichtigen: Wahl der Zusammensetzung und Mengen der Ausgangsstoffe, Wahl der Temperatur der verschiedenen Verfahrensschritte, Reihenfolge der Verfahrensschritte, etc.. Ein Holunderblüten-Getränk, das sowohl von den Verbrauchern als sehr wohlschmeckend empfunden wird, als auch eine ausreichende Lagerungsbeständigkeit aufweist, konnte nur bei einer sehr spezifischen Auswahl der Parameter gewonnen werden. Darüber hinaus wurde ebenfalls darauf Wert gelegt, daß das erfindungsgemäße Getränk auch in größerem Maßstab im wesentlichen einfach herstellbar ist.

Während der mehr als 500 Versuche, die zu der vorliegenden Erfindung führten, gelang es überraschenderweise den Blütenstaub im Getränk derart zu stabilisieren, daß er auch während einer Lagerhaltung des Getränks von bis zu 1½ Jahren in beträchtlichem Ausmaß im wesentlichen fein verteilbar vorliegt und durch Aufschütteln wieder in Suspension gebracht werden kann. Insbesondere gelingt es unter den erfindungsgemäßen Bedingungen eine Klümpchenbildung und eine erhebliche, unerwünschte Farbveränderung zu vermeiden. Dies ermöglicht es ein Getränk bereitzustellen, das dem Wunsch der Verbraucher nach Lebensmitteln mit sichtbaren Pflanzenbestandteilen entgegenkommt, wie es beispielsweise von naturtrüben Obstsäften oder von Vanilleschotenpartikel in Vanillemilchgetränken bekannt ist. Die Erfindung umfaßt natürlich auch Holunder-Getränke, bei denen die Blütenstaub-Partikel teilweise oder im wesentlichen abgetrennt wurden, was durch eine einfache, fachmännische Wahl eines geeigneten Filters möglich ist.

Das erfindungsgemäße Getränk, das unverdünnt oder beispielsweise nach Verdünnung mit weiteren Getränken konsumiert werden kann, ist über wenige, einfache Verfahrensschritte zugänglich.

Hierfür wird zunächst ein Mischung hergestellt, die Wasser, Zucker, Zeste (Abrieb von Orangen- und/oder Zitronenschalen) und Zitronensaft umfaßt. Bei einer Verwendung von 30 l (Liter) Wasser, vorzugsweise Mineralwasser, werden 6 - 10 kg (Kilogramm) Zucker, vorzugsweise 8 - 8,5 kg Zucker, der Schalenabrieb von 1 - 10 Zitronen oder Orangen, vorzugsweise der Schalenabrieb von jeweils zwei oder drei Orangen und Zitronen und 3 - 8 l, vorzugsweise 6 l Zitronensaft zugesetzt. Optional kann der Mischung 2-4 l Wein, vorzugsweise 3 l Wein, vorzugsweise Weißwein, zugesetzt werden, wobei im Falle eines Wein-Zusatzes vorzugsweise 4 l Zitronensaft eingesetzt werden. Neben Zitronensaft können weitere Zitrusfruchtsäfte, beispielsweise Orangensaft, zugegeben werden.

Diese Mischung wird für 10 - 30 Minuten, vorzugsweise für 12 Minuten, zum Sieden erhitzt. Während dieses Vorgangs verflüchtigt sich in der Mischung enthaltener Alkohol im wesentlichen weitgehend oder vollständig.

Die so erhaltene Mischung wird anschließend auf eine Temperatur im Bereich von 75 - 90 °C, vorzugsweise auf 82 - 85 °C, abgekühlt und 8 - 15 kg, vorzugsweise 9 kg, mehr Holunderblütendolden und/oder Holunderblüten werden zugesetzt, wobei die Blüten und/oder Dolden vorzugsweise mit der Mischung übergossen werden. Weiterhin kann zusätzlicher Blütenstaub von Holunderblüten, aber auch anderer Blütenstaub, beispielsweise von Blumen, zugesetzt werden. Umfangreiche Versuche zeigten, daß bei einer zu hohen Temperatur ein bitterer Geschmack auftritt, während bei einer zu niedrigen Temperatur der Blütenstaub nicht optimal gelöst und ein leimiger Geschmack gebildet wird.

Die Blüten und Dolden, vorzugsweise von der Holundersorte wild natur (Schwarzer Holunder) gewonnen, sollten dabei direkt nach dem Pflücken und spätestens bis 12 Stunden, vorzugsweise bis 8 Stunden nach der Lese verwendet werden.

Diese Mischung wird nun während 1-3 Stunden, vorzugsweise während 2 Stunden, bei einer Temperatur in einem Bereich zwischen 65 °C und 80 °C, vorzugsweise bei einer Temperatur in einem Bereich zwischen 72 °C und 78 °C, gehalten. Die Einhaltung der erfindungsgemäßen Bedingungen während dieses Verfahrensschritts ist von Bedeutung. Umfangreiche Versuche zeigten, daß unter diesen Bedingungen während der Warmhaltephase, sowohl eine optimale Geschmacksbildung und Farbstabilität, als auch eine optimale Suspendierbarkeit der Blütenstaub-Partikel erzielt werden kann. In anderen Temperaturbereichen löst sich der Blütenstaub entweder nur in geringen Mengen oder er erfährt eine unerwünschte chemische oder physikalische Veränderung, beispielsweise eine vollständige Auflösung oder eine Klümpchenbildung tritt nach einer Lagerung von ungefähr einem halben Jahr (oder früher) auf.

Anschließend wird die Mischung beispielsweise in einem Kühlhaus, zügig auf eine Temperatur im Bereich von 0-10 °C, vorzugsweise auf 5 °C abgekühlt und mindestens während 4 Stunden, vorzugsweise während 8-10 Stunden, bei einer derartigen Temperatur gelagert. Umfangreiche Versuche zeigten, daß bei einer Über- oder Unterschreitung dieser Lagerungszeit kein annehmbarer Geschmack erhalten wird. Die Kühlung ist aus Hygienegründen wichtig und verhindert eine Gärung.

In einem nächsten Schritt werden die Blüten von der Flüssigkeit abgetrennt, wobei die Mischung zuvor umgerührt und/oder die Holunderblütendolden in der Mischung ausgeschlagen werden. Die abfiltrierten Bestandteile werden dann unter leichtem Druck, beispielsweise mit der Hand oder mit einer mechanischen Presse, abgepreßt. Die dabei gewonnene Suspension wird anschließend wieder mit der Mischung vereinigt.

Als nächster Schritt erfolgt eine Filtration der Mischung, beispielsweise mit einem Filter oder Tuch. Dabei wird der Filter derart gewählt, daß Holunderblütenstaub-Partikeln im wesentlichen in dem Filtrat erhalten bleiben. Durch eine einfache, fachmännische Wahl eines feineren Filters können die Holunderblütenstaub-Partikel natürlich auch teilweise oder im wesentlichen abgetrennt werden.

Anschließend wird das Filtrat pasteurisiert, wovor es beispielsweise in geeignete Behälter oder Flaschen, die als Endverpackung dienen können, abgefüllt werden kann.

Bei einem Getränk, das nach dem erfindungsgemäßen Verfahren erhalten wurde, hielten sich Holundergetränk-typische Farbe, Geschmack und Suspendierbarkeit der Blütenstaubpartikel während bis zu 1,5 Jahren, das heißt es wird eine sehr hohe Lagerstabilität erreicht. Selbst nach Öffnung einer Flasche bleibt das Produkt im Kühlschrank bis zu sechs Wochen haltbar.

Insbesondere kann bei dem erfindungsgemäßen Getränk auf einen Zusatz von Konservierungsmitteln oder auf andere, im Lebensmittelbereich bekannte Hilfsstoffe, wie beispielsweise Farbstoffe, Emulgatoren etc. verzichtet werden.

Wein, kann beispielsweise durch beliebige aus Trauben gewonnene alkoholische Getränke, Fruchtweine, in Wein vorkommende Geschmacks- und Aromasubstanzen in Kombination mit Alkohol oder Wasser oder ein beliebiges alkoholisches Getränk ersetzt werden.

Das auf diese Weise erhaltene, erfindungsgemäße Holunderblüten-Getränk, die sogenannte Holunderblütenessenz, kann entweder direkt konsumiert oder weiter verdünnt werden.

Insbesondere bei direkter Verwendung werden die in der Volksheilkunde bekannten Verwendungen der Holunderblüten, beispielsweise bei Erkältungskrankheiten oder zur Förderung der Resistenz, einen wichtigen Gesichtspunkt für den Verbraucher darstellen.

Für eine Verdünnung der Holunderblütenessenz bieten sich sowohl alkoholhaltige, als auch alkoholfreie Getränke oder eine Kombination von beiden an. Das durch Verdünnung erhaltene Holunderblüten-Getränk ist somit auch für Kinder oder Erwachsene, die beispielsweise aus gesundheitlichen oder religiösen Gründen keinen Alkohol zu sich nehmen wollen, geeignet.

Insbesondere bietet sich beispielsweise ein Zusatz von kohlensäurehaltigem oder -freiem Wasser, Kohlendioxid, Tees, wie beispielsweise Schwarztee, Grüntee, Kräuter- oder Früchtetees, von Fruchtsaft oder zerkleinerten Früchten, von Erfrischungsgetränken, wie beispielsweise Limonaden oder Cola-Getränke, von Milch oder Milchprodukten und/oder von Mischungen dieser Substanzen zu der Holunderblütenessenz an.

Je nach Geschmack kann aber auch jegliches bekannte alkoholhaltige Getränk, beispielsweise Sekt, Weine, Fruchtweine oder Spirituosen zugegeben werden.

Darüber hinaus kann die Holunderblütenessenz als Zusatz zur Zubereitung unterschiedlichster Nahrungsmittel, insbesondere von Süßspeisen, Desserts, Cremes, Gels, aber beispielsweise auch von Gemüsegerichten verwendet werden.

Um ein in ernährungsphysiologischer Hinsicht noch wertvolleres Getränk zu erhalten, kann das Getränk auch mit weiteren Vitaminen, Mineralstoffen und Spurenelemente angereichert werden. Auch ein Zusatz von Milch, Milchprodukten oder Molke liegt im Rahmen der Erfindung. Des weiteren können natürlich beliebige Peptide, Aminosäuren oder Eiweißsubstanzen zugesetzt werden, insbesondere solche bei denen gesundheitsfördernde oder leistungssteigernde Eigenschaften vorhanden sind oder vermutet werden.

Während des gesamten Herstellungsverfahrens und danach können nach Wunsch Gewürze, Farbstoffe, Emulgatoren, Konservierungsmittel, Radikalfänger, Antioxidantien, Ballaststoffe, Blüten, Blütenstäube, Blütenstaub-imitierende Substanzen, Säuren, insbesondere Fruchtsäuren, Fette und Lipide, Hydrokolloide, Geschmacks- und Aromastoffe zugesetzt werden.

Ein weiterer Vorteil ist, daß die nach dem erfindungsgemäßen Verfahren gewonnene Holunderblütenessenz mit beliebigen lebensmitteltechnologischen Verfahren weiter eingeengt werden kann. Das derart gewonnene Konzentrat bietet Vorteile hinsichtlich der Lagerhaltung, die sowohl für Handel, Gaststätten und Privathaushalte von Bedeutung sind. Beispielsweise eignet es sich als Ausgangsstoff zur Herstellung eines Getränks unter Verwendung haushaltsüblicher Geräte zum Versetzen von Wasser mit Kohlensäure.

Die Erfindung betrifft weiter ein Verfahren zur Herstellung eines erfindungsgemäßen Getränks, das gekennzeichnet ist durch die Folge von Herstellungsstufen gemäß Anspruch 1 bis 5.

Die Erfindung wird anhand der folgenden, nicht einschränkenden Beispiele näher erläutert.

### Beispiel 1

### Holunderblütenessenz I

Aus 301 Mineralwasser, 8 kg Zucker, 61 reinem Zitronensaft und dem Schalenabrieb und Saft von jeweils drei Orangen und drei Zitronen wird eine Mischung hergestellt, die für 12 Minuten zum Sieden erhitzt wird. Nach Abkühlung der Mischung auf eine Temperatur im Bereich von 82 - 85 °C werden 9 kg Holunderblütendolden (Schwarzer Holunder) mit der Mischung übergossen. Die so erhaltene Mischung wird nun während zwei Stunden bei einer Temperatur im Bereich von 72 - 78 °C gehalten, anschließend zügig auf 5 °C abgekühlt und während 9 Stunden bei 5 °C gelagert. Anschließend werden die Blüten von der Flüssigkeit abgetrennt, wobei die Holunderblütendolden vor der Abtrennung in der Mischung ausgeschlagen werden und nach der Abtrennung unter leichtem Druck per Hand oder mechanischer Presse abgepreßt werden. Die dabei gewonnene Suspension wird anschließend wieder mit der Mischung vereinigt. Als nächster Schritt erfolgt eine Filtration der Mischung mit einem Filter, wobei die Holunderblütenstaub-Partikeln im wesentlichen in dem Filtrat verbleiben. Das Filtrat wird in Flaschen abgefüllt und pasteurisiert.

### Beispiel 2

### Holunderblütenessenz II

Aus 301 Mineralwasser, 8,5 kg Zucker, 4 1 reinem Zitronensaft, 3 1 trockenem Weißwein und dem Schalenabrieb und Saft von jeweils zwei Orangen und drei Zitronen wird eine Mischung hergestellt, die für 12 Minuten zum Sieden erhitzt wird, wobei der in der Mischung enthaltene Alkohol im wesentlichen oder vollständig verdampft.

Die weiteren Herstellungsschritte erfolgen wie vorstehend in Beispiel 1 beschrieben.

### Beispiel 3

### Mineralwassersaftprodukt

Die erfindungsgemäße Holunderblütenessenz kann zur Herstellung eines gebrauchsfertigen Mineralwasserprodukts verwendet werden. Das Mineralwasserprodukt umfaßt dabei Mineralwasser, Zitronensaft, Vitamin C, Kohlensäure und Holunderblütenessenz.

### Beispiel 4

### Aperitif

Ein alkoholhaltiges Getränk, das beispielsweise als Aperitif verwendbar ist, kann durch Zusatz von Holunderblütenessenz zu Sekt oder Wein in einem Mischungsverhältnis von 1:50 bis 2:1 (v/v) erhalten werden.

## Patentansprüche

1. Getränk mit Inhaltsstoffen von Holunderblüten, insbesondere Holunderblütenstaub, erhältlich durch die folgenden Herstellungsstufen:
a) Herstellen einer Mischung, die Wasser, Zucker, Zeste und Zitronensaft umfaßt;
b) Erhitzen der Mischung zum Sieden und Sieden der Mischung während 10-30 Minuten;
c) Abkühlen der Mischung auf 75- 90 °C;
d) Zugeben von Holunderblüten und/oder Holunderblütendolden;
e) Halten der Mischung bei einer Temperatur in einem Bereich zwischen 65 °C und 80 °C während 1 - 3 Stunden;
f) Abkühlen der Mischung auf 0 - 10 °C;
g) Lagern der Mischung während mindestens 4 Stunden bei 0 - 10 °C;
h) Umrühren der Mischung und/oder Ausschlagen der Holunderblütendolden in der Mischung;
i) Abtrennen der Blüten und Dolden von der Mischung;
j) Abpressen der Holunderblüten und/oder -blütendolden, wobei die derart gewonnene Suspension anschließend mit der Mischung vereinigt wird;
k) Filtrieren der Mischung;
l) Pasteurisieren des Filtrats.

2. Holunderblüten-Getränk nach Anspruch 1, wobei bei Herstellungsstufe a) der Mischung zusätzlich Wein zugesetzt wird.

3. Holunderblüten-Getränk nach Anspruch 1 oder 2, wobei während Herstellungsstufe d) zusätzlich Blütenstaub von Holunderblüten, Blumen oder anderen Blüten zugesetzt wird.

4. Holunderblüten-Getränk nach einem der vorstehenden Ansprüche, wobei während Herstellungsstufe k) die Filtration derart erfolgt, daß Blütenstaub-Partikel in dem Filtrat im wesentlichen erhalten bleiben.

5. Holunderblüten-Getränk nach einen der Ansprüche 1-3, wobei während Herstellungsstufe k) die Filtration derart erfolgt, daß Blütenstaub-Partikel von dem Filtrat teilweise oder im wesentlichen abgetrennt werden.

6. Holunderblüten-Getränk nach einem der vorstehenden Ansprüche **dadurch gekennzeichnet**, da**ß** das Getränk zusätzliche Vitamine, Mineralstoffe und Spurenelemente enthalten kann.

7. Holunderblüten-Getränk nach einem der vorstehenden Ansprüche **dadurch gekennzeichnet, daß** dem Getränk Milchprodukte, Eiweißstoffe, Aminosäuren oder Peptide zugesetzt werden.

8. Holunderblüten-Getränk nach einem der vorstehenden Ansprüche **dadurch gekennzeichnet, daß** das Getränk mit alkoholhaltigen Getränken, Wasser, kohlensäurehaltigem Wasser, Kohlendioxid, Erfrischungsgetränken, Tee und/oder Fruchtsaft versetzt wird.

9. Konzentrat, gewonnen aus einem Holunderblüten-Getränk nach einem der vorstehenden Ansprüche.

10. Holunderblüten-Erfrischungsgetränk, umfassend Holunderblüten-Getränk nach Anspruch 1 bis 7, Mineralwasser, Zitronensaft, Vitamin C.

11. Lebensmittel, zu dem ein Holunderblüten-Getränk oder Konzentrat nach einem der vorstehenden Ansprüche während der Herstellung zugesetzt wurde.

12. Verfahren zur Herstellung eines Holunderblüten-Getränks nach einem der vorstehenden Ansprüche, **gekennzeichnet durch** die Folge von Herstellungsstufen gemäß Anspruch 1-5.

## Claims

1. Beverage with elder flower ingredients, in particular elder flower pollen, obtainable by the following preparation steps:
a) preparing a mixture comprising water, sugar, zest and lemon juice;
b) heating said mixture up to the boiling point and boiling said mixture during 10 - 30 minutes;
c) cooling said mixture to 75 - 90 °C;
d) adding elder flowers and/or umbels of elder flowers;
e) keeping said mixture at a temperature in a range between 65 °C and 80 °C during 1 - 3 hours;
f) cooling said mixture to 0 - 10 °C;
g) storing said mixture during at least 4 hours at 0 - 10 °C;
h) stirring said mixture and/or shaking said umbels of elder flowers in said mixture;
i) separating said flowers and umbels from said mixture;
j) pressing said elder flowers and/or umbels of elder flowers, the resulting suspension subsequently being combined with said mixture;
k) filtrating said mixture;
l) pasteurising the filtrate.

2. Elder flower beverage according to claim 1, wherein during preparation step a) additionally wine is added to said mixture.

3. Elder flower beverage according to claim 1 or 2, wherein during preparation step d) additionally pollen of elder flowers, flowers or other blossoms is added.

4. Elder flower beverage according to any of the preceding claims, wherein said filtration during preparation step k) is performed such that the pollen particles essentially remain in said filtrate.

5. Elder flower beverage according to any of the claims 1 - 3, wherein said filtration during preparation step k) is performed such that pollen particles are partially or substantially separated from said filtrate.

6. Elder flower beverage according to any of the preceding claims, **characterised in that** said beverage can comprise additional vitamins, minerals and trace elements.

7. Elder flower beverage according to any of the preceding claims, **characterised in that** dairy products, proteins, amino acids or peptides are added to the beverage.

8. Elder flower beverage according to any of the preceding claims, **characterised in that** said beverage is mixed with beverages containing alcohol, water, carbonated water, carbon dioxide, soft drinks, tea and/or fruit juice.

9. Concentrate obtainable from an elder flower beverage according to any of the preceding claims.

10. Elder flower soft drink, comprising an elder flower beverage according to any of the claims 1 to 7, mineral water, lemon juice, vitamin C.

11. Food, which food has been supplemented with an elder flower beverage or concentrate according to any of the preceding claims during the preparation.

12. Process for the preparation of an elder flower beverage according to any of the preceding claims, **characterised by** the sequence of preparation steps according to any of the claims 1 to 5.

## Revendications

1. Boisson comprenant des ingrédients de fleurs de sureau, en particulier de la poussière de fleur de sureau, qui peuvent être obtenus par les étapes de préparation suivantes :
a) Préparation d'un mélange qui comporte de l'eau, du sucre, du zeste et du jus de citron ;
b) Chauffage du mélange pour faire bouillir et mise en ébullition du mélange pendant 10-30 minutes ;
c) Refroidissement du mélange à 75-90°C ;
d) Ajout de fleurs de sureau et/ou d'ombelles de fleurs de sureau ;
e) Maintien du mélange à une température dans une zone comprise entre 65°C et 80°C pendant 1-3 heures
f) Refroidissement du mélange à 0-10 °C ;
g) Stockage du mélange pendant au moins 4 heures à 0-10°C
h) Agitation du mélange et/ou battage des ombelles de fleurs de sureau ;
i) Séparation des fleurs et ombelles du mélange ;
j) Exprimage des feuilles et/ou des ombelles de feuilles de sureau dans le mélange, la suspension obtenue de cette façon étant ensuite réunie avec le mélange ;
k) Filtration du mélange ;
l) Pasteurisation du filtrat.

2. Boisson à base de fleurs de sureau selon la revendication 1, dans laquelle du vin est ajouté en plus au mélange pendant l'étape de préparation a).

3. Boisson à base de fleurs de sureau selon la revendication 1 ou 2, dans laquelle de la poussière de fleurs de sureau, de fleurs et d'autres espèces florales est ajoutée en plus pendant l'étape de préparation d).

4. Boisson à base de fleurs de sureau selon l'une quelconque des revendications précédentes, dans laquelle la filtration est effectuée pendant l'étape de préparation k) de façon à ce que les particules de poussière de fleurs restent essentiellement maintenues dans le filtrat.

5. Boisson à base de fleurs de sureau selon l'une quelconque des revendications 1-3, dans laquelle la filtration est effectuée pendant l'étape de préparation k) de façon à ce que les particules de poussière de fleur soient partiellement ou essentiellement séparées du filtrat.

6. Boisson à base de fleurs de sureau selon l'une quelconque des revendications précédentes, **caractérisée en ce que** la boisson peut contenir des vitamines supplémentaires, des matières minérales et des oligo-éléments.

7. Boisson à base de fleurs de sureau selon l'une quelconque des revendications précédentes, **caractérisée en ce que** des produits laitiers, des protéines, des acides aminés ou des peptides sont ajoutés à la boisson.

8. Boisson à base de fleurs de sureau selon l'une quelconque des revendications précédentes, **caractérisée en ce que** la boisson est mélangée à des boissons alcooliques, à de l'eau, à de l'eau contenant de l'acide carbonique, à du dioxyde de carbone, à des boissons rafraîchissantes, à du thé et/ou à du jus de fruit.

9. Concentré obtenu à partir d'une boisson à base de fleurs de sureau selon l'une quelconque des revendications précédentes.

10. Boisson à base de fleurs de sureau, comprenant une boisson à base de fleurs de sureau selon la revendication 1 à 7, de l'eau minérale, du jus de citron, de la vitamine C.

11. Denrée alimentaire à laquelle une boisson à base de fleurs de sureau ou un concentré selon l'une quelconque des revendications précédentes a été ajouté(e) pendant la préparation.

12. Procédé de préparation d'une boisson à base de fleurs de sureau selon l'une quelconque des revendications précédentes, **caractérisé par** la séquence des étapes de préparation selon la revendication 1-5.
